# EUROPÄISCHE PATENTSCHRIFT

(11) **EP 2 001 650 B1**
(45) Veröffentlichungstag und Bekanntmachung des Hinweises auf die Patenterteilung: **16.03.2016**
(21) Anmeldenummer: 07711985.7
(22) Anmeldetag: 21.03.2007
(51) Int. Cl.: B29C 47/64, B29B 7/42

(54) **SCHNECKENELEMENT**
SCREW ELEMENT
ELEMENT HELICOIDAL

(30) Priorität: 28.03.2006 DE 102006014692
(43) Veröffentlichungstag der Anmeldung: 17.12.2008
(73) Patentinhaber: KraussMaffei Berstorff GmbH, 30625 Hannover (DE)
(72) Erfinder: BEHLING, Michael, 31787 Hameln (DE); DAHL, Ralf, J., 30938 Burgwedel (DE)
(74) Vertreter: Wilhelm, Ludwig
(86) Internationale Anmeldenummer: PCT/EP2007/002482
(87) Internationale Veröffentlichungsnummer: WO 2007/112861

(56) Entgegenhaltungen:
- DE-A1-102004 019 430
- JP-A- 2004 202 871
- US-A- 5 728 337
- DATABASE WPI Week 200104 Derwent Publications Ltd., London, GB; AN 2001-027937 XP002446008 & JP 2000 296517 A (JAPAN STEEL WORKS LTD) 24. Oktober 2000 (2000-10-24)

## Beschreibung

Die Erfindung betrifft ein knetelement gemäß dem Oberbegriff des Anspruchs 1.

Bei der Aufbereitung von Kunststoffen in einer Plastifiziereinheit, wie diese bei Extrudern oder bei Spritzgießmaschinen vorhanden sind, werden unterschiedlichste Verfahren verwendet. Eines dieses Verfahren ist das Compoundieren, d.h. das Einmischen von Füll- oder Verstärkungsstoffen, Einarbeitung von Farben oder Pigmenten, das Verblenden von verschiedenen Materialien wie z.B. Kunststoffen oder Elastomeren, reaktive Verfahren oder dergleichen. Sämtlichen Verfahren ist gemeinsam, dass diese mittels zwei- oder mehrwelliger Extruder erfolgt, die gleichsinnig oder gegensinnig drehende Schnecken aufweisen. Mittels der Schnecken wird Scherenergie zum Aufschmelzen der plastischen Materialien in das Material eingebracht. Die Schnecken weisen sogenannte Schneckenelemente auf, die häufig mehrgängig ausgeführt sind.

Ein spezielles Schneckenelement ist das sogenannte Knetelement, in der Literatur auch Knetblock genannt. Ein solcher Knetblock besteht aus spiralförmigen Schneckenteilen oder mehreren, hintereinander in Verfahrensrichtung angeordneter Kneteinheiten, die eine gewisse Geometrie aufweisen. Bei den bekannten Knetelementen ist die Geometrie der Kneteinheiten, insbesondere hinsichtlich ihrer Breite und ihren Außen- und Innendurchmessern gleich, und wird nach der Größe der Plastifiziereinheit, d.h. der Plastifiziereinheit des Extruders oder der Spritzgießmaschine gewählt.

Die Dissipation der über den Antrieb über ein Getriebe und über die Schneckenwelle eingebrachten mechanischen Energie wird neben beispielsweise der Abhängigkeit der Enthalpie des zu verarbeitenden Kunststoffs durch die Art des eingesetzten Schneckenaufbaus bestimmt. Die Art des eingesetzten Schneckenaufbaus wird auch Konfiguration genannt. Die Konfiguration variiert beispielsweise in der Art und Anzahl der Knetblöcke und der sonstigen Schneckenelemente.

Vornehmlich wird direkt vor sowie über dem oder den ersten Knetelementen die Hauptumsetzung der Energie in Abhängigkeit der Geometrie der Schneckenelemente erreicht. Diese Hauptumsetzung der Energie erfolgt durch die Scherung. Dabei sind primär die Drehzahl der Schnecke und somit die (Winkel-)Geschwindigkeit der Kneteinheiten, die Spalte zwischen der Kneteinheit und dem Extrudergehäuse sowie bei einem Doppelschneckenextruder den Kneteinheiten im Zwickefbereich und die Kammfläche der Knetelemente bestimmend. Aus diesen Größen lässt sich entsprechend die Schergeschwindigkeit wie auch die Scherspannung berechnen. Über die Scherspannung ergibt sich die Aufschmelzung des zu plastifizierenden Materials. Bei der Aufschmelzung ergeben sich die höchsten mechanischen Belastungen für das Schneckenelement und deren Wellen/Naben-Verbindung.

Ein solches Knetelement ist aus den eingetragenen Unterlagen des deutschen Gebrauchsmusters 82 32 585 bekannt. Das dort gezeigte Schneckenelement umfasst einzelne Kneteinheiten, die separat zu einem Knetelement zusammengesteckt werden können. Die Kneteinheiten weisen hierbei die gleiche Geometrie auf.

In der DE 100 50 295 A1 ist ein Mehrwellen-Extruder zur Aufbereitung und/oder Verarbeitung eines mit Füllstoff versetzten Elastomers mit mindestens zwei Wellen beschrieben, die in Förderrichtung gesehen eine Einfüllzone, eine Mastifizierzone und eine Dispergierzone umfassen. Dabei können der Mastifizier- wie auch der Dispergierabschnitt Knetscheiben aufweisen, deren maximaler Durchmesser in Produktionsrichtung zu- oder abnimmt.

In der Zusammenfassung der JP 2004202871 ist eine Knetschnecke beschrieben, die zwischen zwei Förderabschnitten einen Knetabschnitt aufweist, deren Knetscheiben einen in Förderrichtung kontinuierlich zunehmenden Durchmesser aufweisen.

Die DE 199 50 917 A1 befasst sich mit einem Doppelschneckenextruder mit bestimmten Scheckenelementen, bei dem bei guter dispersiver Mischwirkung eine möglichst geringe dissipative Temperaturerhöhung auftritt. Lediglich allgemein ist in der Beschreibungseinleitüng darauf hingewiesen, dass Schneckenelemente kontinuierliche Steigungswinkel (Verdrehungen) aufweisen können oder auch in Scheiben variabler Breite, deren Steigung unendlich ist (keine Verdrehung) oder unter einem Winkelversatz angeordnet sind (sog. Knetblöcke) vorgesehen sein können.

Aus US 5,728,337 ist eine Knetschnecke mit Knetscheiben unterschiedlicher Breite in beliebiger Abfolge bekannt.

Der vorliegenden Erfindung liegt daher die Aufgabe zugrunde, ein knetelement der eingangs genannten Art anzugeben, bei dem eine gute Plastifizierung des zu verarbeitenden Materials bei verminderter mechanischer Belastung der Schneckenelemente ermöglicht wird.

Erfindungsgemäß wird die voranstehende Aufgabe durch ein knetelement mit den Merkmalen des Patentanspruchs 1 gelöst.

Danach ist das in Rede stehende Schneckenelement derart ausgestaltet und weitergebildet, dass sich die Geometrie miridestens fünf nacheinander angeordneter Kneteinheiten unterscheidet, wobei die Breite der Kneteinheiten in Verfahrensrichtung zunimmt

Hierdurch würde der Scherspalt dahingehend beeinflusst, dass die Scherfläche verändert wird. Ebenso wie bei einer - nachfolgend noch erörterten - Veränderung des Durchmessers der Kneteinheit könnte dies innerhalb einer oder mehrerer aufeinander folgender Schneckenelemente erfolgen. Die Kneteinheiten oder Schneckenteile weisen über die Breite des Schneckenelements durchgängig keine gleiche Breite auf. Zudem könnten die Kneteinheiten oder Schneckenteilabschnitte durchgängig auch keinen gleichen Durchmesser besitzen. Die Schneckenelemente könnten unabhängig von der Anzahl der Elemente in der Schnecke sein. Somit könnten die Scheiben-Stegbreitenvariabilität über mehrere Schneckenelemente erstrecken. Die Schneckenelemente könnten somit längenunabhängig sein.

Insgesamt nimmt die Breite der Kneteinheiten in Verfahrensrichtung zu. Damit würde auch die Scherung des zu plastifizierenden Materials in Verfahrensrichtung zunehmen.

Als Verfahrensrichtung wird also die Richtung der Plastifiziereinheit definiert, in der das zu plastifizierende und/oder plastifizierte Material im Wesentlichen transportiert wird.

Insgesamt ist erkannt worden, dass man zum Erhalt einer guten Plastifizierung bei verringerter mechanischer Belastung des Schneckenelements von der bekannten Form der gleichen Geometrie der Kneteinheiten abweichen kann. Wählt man unterschiedliche Geometrien, nämlich unterschiedliche Breiten, bei den Kneteinheiten, so ist es möglich, die Einleitung der Scherung und der mechanischen Belastung zu kontrollieren und das jeweilige Verfahren zu optimieren.

Der Einsatz von den erfindungsgemäßen Schneckenelementen ist bei einer Vielzahl von Plastifiziereinheiten und den unterschiedlichsten Verfahren möglich. Die erfindungsgemäßen Knetelemente sind bei zwei- oder mehrwelligen, gleichsinnig oder gegensinnig drehenden Plastifiziereinheiten denkbar. Auch ist es möglich, dass die Schneckenelemente ein- oder mehrgängig ausgestaltet sind, aus spiralförmigen Schneckenteilen oder integral ausgeführter oder lose miteinander verbundenen Kneteinheiten bestehen. Die Krieteinheiten werden abhängig von der Größe der Plastifiziereinheit und der jeweiligen Verfahrensaufgabe gewählt. Die erfindungsgemäße Ausgestaltung des Schneckenelements ist demnach unabhängig von der Maschinengröße und dem Durchmesser des Schneckenelements. Ferner sind die Schneckenelemente unabhängig von der Art der Welle/Nabe-Verbindung sowie der Gängigkeit des Schneckenelements. Die Schneckenelemente können ferner bei jedweder Art von zu plastifizierendem Material eingesetzt werden und sind unabhängig von dem Da/Dᵢ-Verhältnis sowie von der Drehrichtung der Schnecken.

In besonders vorteilhafter Weise ist die Geometrie der Kneteinheiten derart ausgestaltet,-dass eine kontinuierliche Zunahme der Scherung des zu plastifizierenden Materials erreichbar ist. Dies hätte den besonderen Vorteil, dass die Einleitung der Scherung nicht massiv und plötzlich, sondern gleitend, beispielsweise stetig zunehmend, ausgestaltet werden kann. Mechanisch wäre eine solche Ausgestaltung besonders vorteilhaft, da die Belastung des Elements ebenfalls eher ansteigend schwellend über eine längere Strecke als lokal brachial in einem engen begrenzten Bereich erfolgt.

Wie bereits erwähnt könnte auch der Durchmesser von mindestens zwei Kneteinheiten unterschiedlich sein. Hierdurch würde der Scherspalt, der zwischen der Kneteinheit und dem Extrudergehäuse gebildet wird, in Verfahrensrichtung größer oder kleiner ausgestaltet sein. In einer bevorzugten Ausgestaltung könnten die Durchmesser der einzelnen Kneteinheiten oder Abschnitte in Verfahrensrichtung zunehmen. Die Kneteinheiten sowie hintereinander angeordnete Knetelemente könnten hierbei durchgängig unterschiedliche Durchmesser aufweisen.

Die Abfolge der Durchmesser muss jedoch nicht zwingend stetig zunehmen, sondern kann auch partiell gleich sein oder abnehmen. Je nach Verfahrensaufgabe sind jedoch alle möglichen Variationen des Durchmessers denkbar. Die Durchmesservariabilität kann sich hierbei über verschiedene Schneckenelemente erstrecken.

Bei einer Zunahme des Durchmessers der Kneteinheiten in Verfahrensrichtung würde die mechanische Belastung des Elements ansteigend schwellend über eine längere Strecke erfolgen. Die Abfolge der Variabilität des Durchmessers der Kneteinheiten muss jedoch nicht stetig zunehmen, sondern kann partiell auch gleich sein oder abnehmen.

Die Variabilität der Geometrie hat somit einen direkten Einfluss auf die Entwicklung der Schergeschwindigkeit und der Scherspannung vor und in dem Schneckenelement sowie auf die Entwicklung der mechanischen Belastung der Elemente. Ferner kann das Dₐ/Dⱼ-Verhältnis der Kneteinheiten kann bei den erfindungsgemäßen Schneckenelement konstant sein oder aber variieren.

In einer vorteilhaften Ausgestaltung könnte der Durchmesser von mindestens zwei Kneteinheiten unterschiedlich sein. Hierdurch wäre eine besonders große Variabilität des Scherspalts ermöglicht. Ein derart ausgestaltetes Schneckenelement wäre ebenfalls besonders gut an unterschiedlichste Verfahrensaufgaben anpassbar.

Im Rahmen einer besonders guten Einleitung der Scherung und im Hinblick auf eine ausgewogene Belastung des Scherelements könnte sowohl der Durchmesser als auch die Breite der Kneteinheiten in Verfahrensrichtung zunehmen.

Es gibt nun verschiedene Möglichkeiten, die Lehre der vorliegenden in vorteilhafter Weise auszugestalten und weiterzubilden. Dazu ist einerseits auf die dem Patentanspruch 1 nachgeordneten Patentansprüche und andererseits auf die nachfolgende Erläuterung von bevorzugten Ausführungsbeispielen des erfindungsgemäßen Schneckenelements anhand der Zeichnung zu verweisen. In Verbindung der Erläuterung der bevorzugten Ausführungsbeispiele des erfindungsgemäßen Schneckenelements anhand der Zeichnung werden auch im allgemeinen bevorzugte Ausgestaltungen und Weiterbildungen der Lehre erläutert. In der Zeichnung zeigen die
- Fig. 1: in einer schematischen Draufsicht ein Ausführungsbeispiel eines Schneckenelements mit variablem Durchmesser,
- Fig. 2: in einer schematischen Seitenansicht das in Fig. 1 gezeigte Ausführungsbeispiel eines Schneckenelements mit variablem Durchmesser, das nicht Teil der Erfindung ist.
- Fig. 3: in einer schematischen Draufsicht ein Ausführungsbeispiel eines erfindungsgemäßen Schneckenelements mit variabler Breite der Kneteinheit und
- Fig. 4: in einer schematischen Seitenansicht das in Fig. 3 gezeigte Ausführungsbeispiel eines erfindungsgemäßen Schneckenelements mit variabler Breite der Kneteinheit.

In den gezeigten Ausführungsbeispielen handelt es sich bei dem Schneckenelement um ein Knetelement 1, das zur Verwendung in einer nicht gezeigten Plastifiziereinheit mit einer ebenfalls nicht gezeigten Schneckenwelle verwendet wird.

Das Knetelement 1 ist aus Kneteinheiten 2 zusammengesetzt, die in diesem Ausführungsbeispiel fest miteinander verbunden sind. Die Kneteinheiten 2 sind auf einer gemeinsamen Achse anordenbar. Hierzu weisen die Kneteinheiten 2 eine Verzahnung auf, die mit einer Verzahnung auf der Schneckenwelle in Eingriff bringbar ist und somit das Knetelement im Wesentlichen drehfest auf der Schneckenwelle festgelegt wird. Die Kneteinheiten 2 weisen eine Geometrie auf, die von zwei Durchmessern Dᵢ und Dₐ, d.h. den Durchmessern D₁ bzw. D₂, D₃ oder D₄ bestimmt ist.

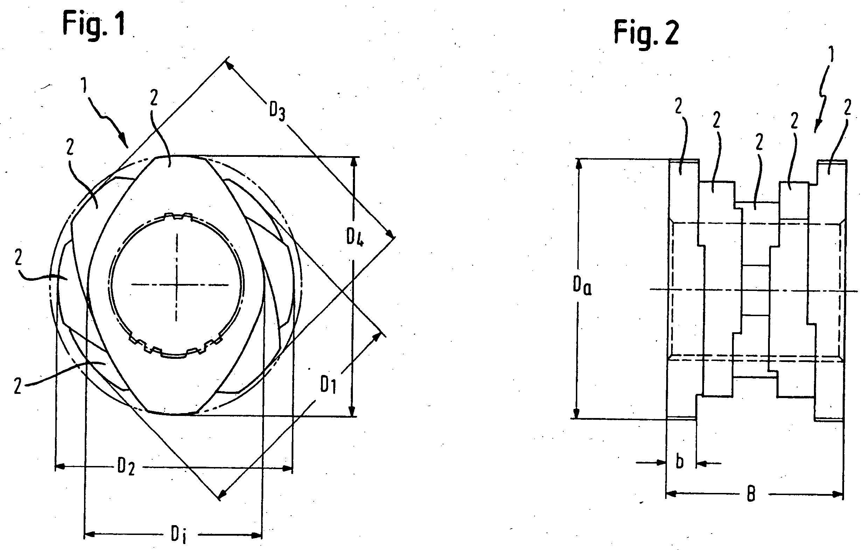

Dabei unterscheidet sich die Geometrie fünf nacheinander angeordneter Kneteinheiten 2. Bei dem in Fig. 1 gezeigten Knetelement ist es nun so, dass der Außendurchmesser Dₐ in Verfahrensrichtung zunimmt. Dies bedeutet, dass die Kneteinheit 2 mit dem geringsten Durchmesser D₁ bei diesem Ausführungsbeispiel am nächsten in Richtung der Fütterzone angeordnet ist und die Knetscheibe 2 mit dem Außendurchmesser D₄ am weitesten in Richtung der Austragszone angeordnet ist. In dem hier gezeigten Ausführungsbeispiel ist also D₄ größer als D₃ und D₃ größer als D₂. D₁ ist wiederum kleiner als D₂, d.h. D₁ < D₂ < D₃ < D₄. Der Innendurchmesser D₁ des Knetelements 1 bleibt hierbei konstant. Es ist bei jedweder Ausgestaltung denkbar, dass der Innendurchmesser Dᵢ entsprechend oder anders als der Außendurchmessers Dₐ variiert.

Figur 2 zeigt das in Fig. 1 gezeigte Knetelement 1 in einer schematischen Seitenansicht. Das Knetelement 1 dieses Ausführungsbeispiels weist eine Gesamtbreite B auf. Die Kneteinheiten 2 weisen ihrerseits eine Breite b auf.

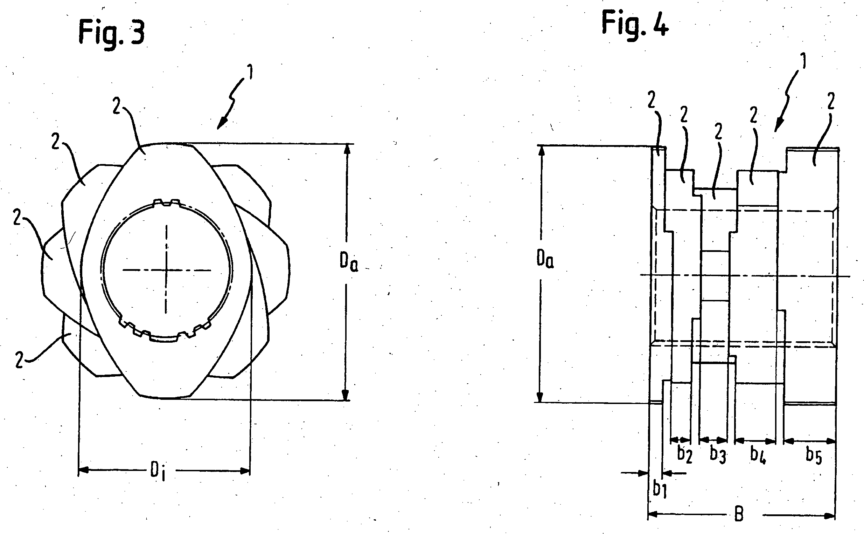

Fig. 3 zeigt ein erfindungsgemäßes Knetelement mit variabler Stegbreite, d.h. dass die Kneteinheiten 2 unterschiedliche Breiten b aufweisen. Das Durchmesserverhältnis Dₐ/Dᵢ ist in diesem Ausführungsbeispiel konstant. Ferner ist zu beachten, dass der Außendurchmesser Dₐ ebenfalls konstant ist. Die Breite b der Kneteinheiten 2 nimmt in Verfahrensrichtung zu. Somit wird die Scherung des Materials über die Breite B des Knetelements 1 erhöht. In diesem konkreten Ausführungsbeispiel ist die Breite b₁ der Kneteinheit 2, die bei diesem Knetelement 1 am nächsten in Richtung Fütterungszone angeordnet ist, kleiner als die Breite b₂. Die Breite b₂ ist wiederum kleiner als die Breite b₃. Die Breite b₄ der nächsten Kneteinheit 2 ist wiederum größer als die Breite b₃ der vorherigen Kneteinheit 2. Ferner ist die Breite b₅ der Kneteinheit 2, welche bezüglich dieses Knetelements 2 am weitesten in Richtung Austragszone angeordnet ist, größer als die Breite b₄, d.h. b₁<b₂<b₃<b₄.

Hinsichtlich weiterer Details wird zur Vermeidung von Wiederholungen auf die allgemeine Beschreibung verwiesen.

Schließlich sei ausdrücklich darauf hingewiesen, dass die voranstehend beschriebenen Ausführungsbeispiele lediglich zur Erörterung der beanspruchten Lehre dienen, diese jedoch nicht auf diese Ausführungsbeispiele einschränken.

### Bezugszeichenliste

- 1: Knetelement
- 2: Kneteinheit
- Dₐ, D₁, D₂, D₃, D₄: Außendurchmesser
- Dᵢ: Innendurchmesser Kneteinheit
- b: Breite der Kneteinheit
- B: Breite des Knetelements

## Patentansprüche

1. Knetelement (1), zur Verwendung in einer Plastifiziereinheit mit einer Schneckenwelle, mit mindestens fünf Kneteinheiten (2), wobei
- die Kneteinheiten (2) auf einer gemeinsamen Achse, beispielsweise der Schneckenwelle, anordenbar sind,
- die Kneteinheiten (2) eine Geometrie aufweisen und
- sich die Geometrie mindestens zweier nacheinander angeordneter Kneteinheiten (2) unterscheidet, **dadurch gekennzeichnet, dass**
die Breite (b) der Kneteinheiten (2) in Verfahrensrichtung zunimmt.

2. Schneckenelement nach Anspruch 1, **dadurch gekennzeichnet, dass** der Durchmesser (D₁, D₂, D₃, D₄) von mindestens zwei Kneteinheiten (2) unterschiedlich ist.

3. Schneckenelement nach Anspruch 2, **dadurch gekennzeichnet, dass** der Durchmesser (D₁, D₂, D₃, D₄) der Kneteinheiten (2) in Verfahrensrichtung zunimmt.

## Claims

1. A kneading element (1) for use in a plasticizing unit with a screw shaft, having at least three kneading units (2), wherein
- the kneading units (2) can be arranged on a common axis, for example the screw shaft,
- the kneading units (2) have a geometry and
- the geometry at least of two kneading units (2) arranged one after the other differs,
**characterized in that**
the width (b) of the kneading units (2) increases in processing direction.

2. The screw element according to Claim 1, **characterized in that** the diameter (D₁, D₂, D₃, D₄) of at least two kneading units (2) differs.

3. The screw element according to Claim 2, **characterized in that** the diameter (D₁, D₂, D₃, D₄) of the kneading units (2) increases in processing direction.

## Revendications

1. Élément de pétrissage (1) destiné à être utilisé dans une unité de plastification comprenant un arbre sans fin, comprenant au moins cinq unités de pétrissage (2), dans lequel
- les unités de pétrissage (2) peuvent être agencées sur un axe commun, par exemple de l'arbre sans fin,
- les unités de pétrissage (2) présentent une géométrie et
- la géométrie d'au moins deux unités de pétrissage (2) disposées l'une après l'autre est différente, **caractérisé en ce que**
la largeur (b) des unités de pétrissage (2) augmente dans le sens du procédé.

2. Élément hélicoïdal selon la revendication 1, **caractérisé en ce que** le diamètre (D₁, D₂, D₃, D₄) d' au moins deux unités de pétrissage (2) est différent.

3. Élément hélicoïdal selon la revendication 1, **caractérisé en ce que** le diamètre (D₁, D₂, D₃, D₄) des unités de pétrissage (2) augmente dans le sens du procédé.
